Europäisches Patentamt

European Patent Office

Office européen des brevets

(11) Publication number: **0 094 463**
A2

# (12) EUROPEAN PATENT APPLICATION

(21) Application number: **82305152.9**

(22) Date of filing: **29.09.82**

(51) Int. Cl.³: **G 01 B 11/10**
**G 01 B 11/00**

(30) Priority: **17.05.82 GB 8214294**

(43) Date of publication of application:
**23.11.83 Bulletin 83/47**

(84) Designated Contracting States:
**AT BE CH DE FR GB IT LI LU NL SE**

(71) Applicant: Beta Instrument Company Limited
Halifax House Halifax Road Cressex Industrial Estate
High Wycombe Bucks., HP12 3SW(GB)

(72) Inventor: Kyriakis, John
24 Mulgrave Road
Harrow Middlesex, HA1 3UG(GB)

(74) Representative: Allsop, John Rowland et al,
c/o Edward Evans & Co. Chancery House 53-64 Chancery
Lane
London, WC2A 1SD(GB)

(54) Optical measuring apparatus.

(57) An optical measuring device comprising a gauging head
(1) provided with a measuring gate (2) forming a guideway
(G) for an article (3) whose dimensional properties are to be
measured.

A parallel beam of light (P) is established between the
opposing walls of guide members (M) of the measuring gate
(2), which are provided with slits (S) for emission and
reception of the parallel beam.

To remove or prevent the collection of particulate
contaminant on the optical components (4, 5, 6, 7) within the
gauging head (1) the guide members (M) have internal ducts
(D) so that air may be directed to the ducts (D) and passed
through each opposing slit (S) to set up a curtain of air across
the measuring gate (2) thus repelling particulate contami-
nant floating in the guideway which would otherwise enter
the slits (S).

FIG.3.

## "Optical Measuring Apparatus"

### FIELD OF THE INVENTION

The present invention relates to an optical measuring device and particularly to such a device for determining the dimensional properties of an article.

### BACKGROUND ART

Optical instruments for use in measuring the dimensional properties of various articles statistically or dynamically such as for example the dimensional properties of cables, glass fibres, glass rods, alluminium and steel profiles produced by extrusion, are known.

The ability to take accurate measurements on such devices has proved difficult due to the presence of floating particles which are prone to collect on the optical components of the measuring device. Such particles can be in the form of dust, chalk, steam, water droplets, fungus, oil and smoke fumes, all of which can normally be found in industrial environments.

Hence in prior devices, in order to maintain accuracy, the optical surfaces of the optical components making up the measuring device, have to be frequently dismantled and carefully cleaned.

### SUMMARY OF THE INVENTION

It is an object of the invention therefore to eliminate the disadvantages of the prior art and to provide an optical measuring device which is capable of providing highly accurate measurements while obviating the need to dismantle the apparatus at frequent intervals to clean the optical components.

According to the invention there is provided an optical measuring device for calculating a dimensional property of an article from the shadow produced by the article passing through a light beam and comprising a gauging head formed with a guideway for passing an article to be optically measured, opposing slits in a pair of spaced guide members of the guideway in communication with the interior of the gauging head, through which light is emitted and received respectively by an optical system within the gauging head to establish said beam of light across the guideway characterised in that each guide member is provided with internal ducting for directing a particle-free gaseous medium through the opposing slits to the guideway thereby to set up a particle-free gaseous curtain across the guideway and prevent contaminating matter from entering said slits.

The advantage of this arrangement is that since there is a continuous supply of particle-free gas, preferably air, across the guideway unwanted floating matter is unable to reach the optical components of the device thus preventing them settling on these components and effecting accuracy of the measurements.

In particular the ingress of particles into the slits and thus onto the optical components of the device is prevented by the opposing draught of air emanating from the slits.

Other features and advantages of the present invention will become apparent from the description that follows and illustrated in the drawings.

BRIEF DESCRIPTION OF THE DRAWINGS

An embodiment of the present invention will now be

**0094463**

described by way of example with refrence to the accompanying drawings wherein:

Figures 1 and 2 illustrate schematically an optical measuring device according to the prior art; and

Figures 3 and 4 illustrate schematically an optical measuring device according to the invention.

BEST MODES OF CARRYING OUT THE INVENTION

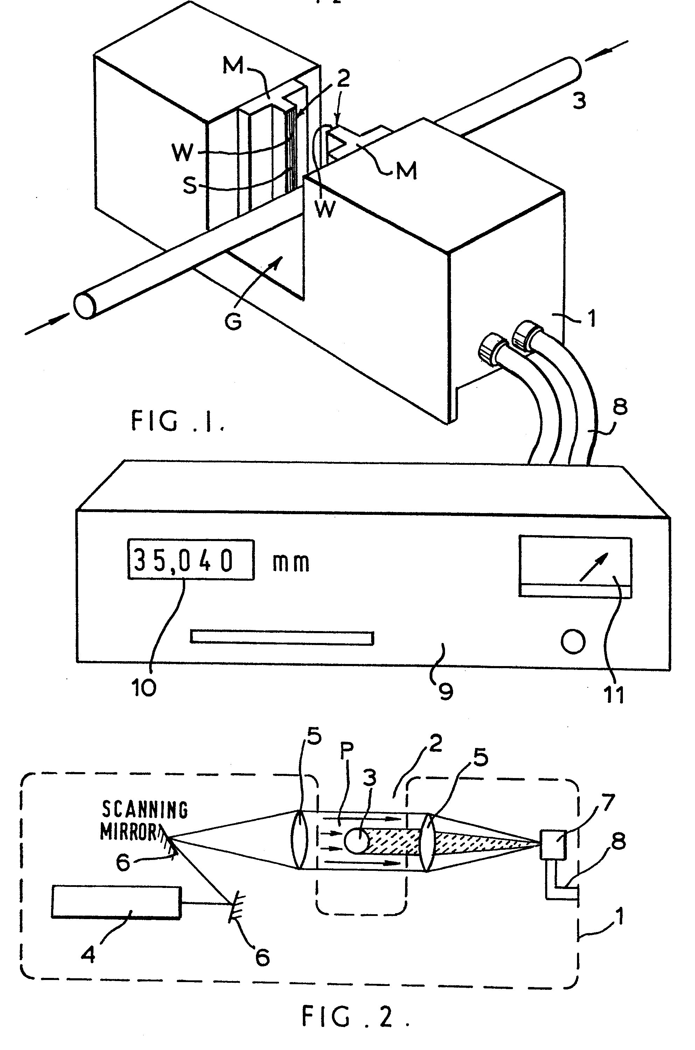

The prior art optical measuring device shown in Figures 1 and 2 comprises a gauging head (1) having an optical measuring gate (2) forming a guideway (G) for passage of an elongate article (3) whose dimensional properties are to be determined.

The gate (2) is composed of two guide members (M) to each side of the guideway (G), the members (M) being arranged such that respective wall surfaces (W) face one another across the guideway (G).

Each wall surface (W) is provided with a narrow slit (S) the slits (S) being in optical communication through its associated member (M), with the interior of the gauging head (1).

An optical system is mounted within the gauging head (1) as will be seen from Figure 2. The optical system comprises a light source (4), and pair of lenses (5) one on each side of the guideway (G).

A beam of light is projected from the light source (4) to the first of the lenses (5) through two scanning mirrors the second mirror in the light path from the light source (4) being positioned on the optical axis of the first of the lenses (5) so that said first lens projects a parallel beam of light (P) across the guideway (G) through one of the slits (S) and is received by the second of the lenses (5) which focuses the beam onto a photocell (7), through the other slit (S).

The photoell (7) is connected by leads (8) to an indicator unit (9) having a digital display (10) and a parameter deviation meter (11).

The article (3) intercepts the parallel light beam (P) and its presence causes a shadow to fall on the second of the lenses (5) which is picked up by the photocell (7), the shadow or dark portion corresponding to the diameter, in the example shown, of the article (3) passing along the guideway (G).

The optical light and dark portions are converted to electrical signals by the photocell (7) and fed via the leads (8) to the indicator unit (9) which performs electronic calculations to relate the shadow to the dimension being measured.

In the example shown the actual diameter  is displayed on the digital display (10) and any deviation in diameter as the article (3) passes through the guideway (5) is shown on the meter (11).

With the prior art device as described above difficulties are experienced in obtaining highly accurate measurements and these are due to the build-up of contaminants on the electrical components of the lens-mirror system (4,5 and 6). Such foreign matter floating freely in the optical gate (2) of the gauge head (1), will find its way naturally through the narrow slits (S) through which the light beam passes to eventually deposit on the lenses (5) and mirrors (6) and after a while forming an opaque surface impairing light transmission.

In order to restore the situation the lenses and optical surfaces have to be periodically removed from the gauging head (1) which of necessity is time consuming and not wholly effective.

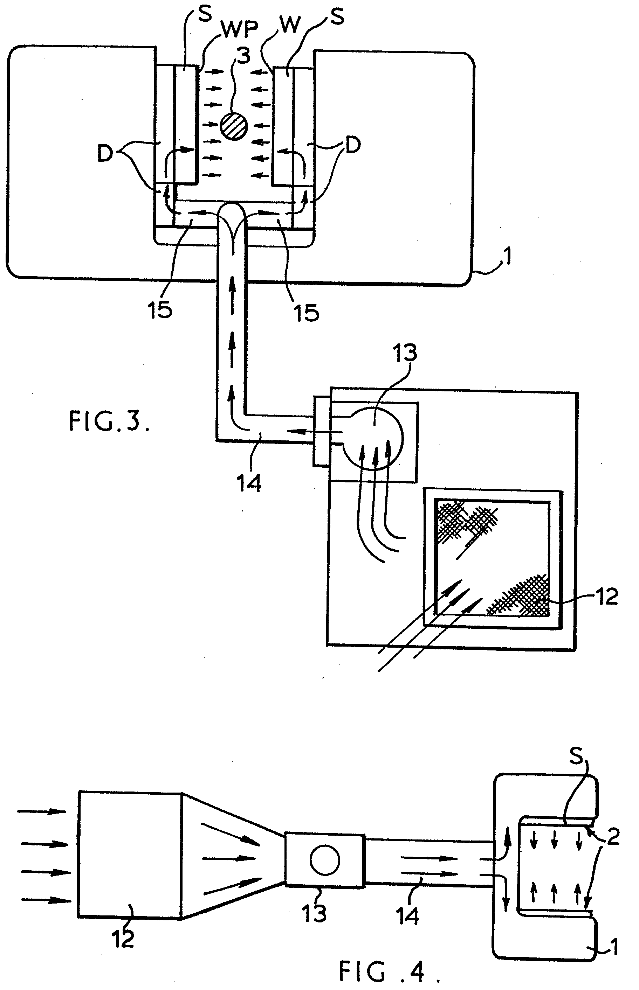

These problems have been overcome by the invention as depicted by way of example to Figures 3 and 4. This device relies on a clean curtain of air being at all times present at the measuring gate (2), this curtain of air having the capability of repelling all unwanted particles in free flight in that area from entering the two narrow slits (S) in the measuring gate (2) and fouling the internally-mounted optical components.

To this end each guide member (M) is provided with internal ducting (D) for directing a gaseous medium, preferably air, through the guide members (M) to the slits (S), and thus in the path of the light beam (P), to set up opposing draughts of air across the guideway.

To achieve the delivery of particle-free air to the ducting (D), a pneumatic system is employed as shown in Figures 3 and 4 comprising a filter (12), a pneumatic pump (13) for drawing air from ambient through the filter (12), and a duct (14) for ducting the air to the measuring gate (2).

The duct (14) is connected to branched passageways (15) at the base of the guideway (G), the branched passageways (15) being integrally formed with an associated guide member (M), and leading to the internal ducting (D) therein.

Since the air in passing from the internal ducting (D) in a respective guide member (M) to atmosphere, does so through the narrow slits (S) which act as restrictions, the consequent air pressure build-up with the ducting (D) and upstream of the slits (S), acts as an additional repellent to the ingress of dust particles and similar contaminatory materials from entering the slits (S) and settling on the optical components of the device.

In use the pump (13) sucks air from the atmosphere through the fine filters (12) where all particles which would normally be in free flight are trapped.

The pump (13) delivers air which has been totally cleaned and free from particulate contamination through the delivery duct (14) and the measuring gate (2).

Thus it will be appreciated that the problems of the prior art device are eliminated in that the need to clean the lenses and other optical components does not become necessary during a measuring operation and therefore continuous measuring is possible freed from maintenance and reading inaccuracies.

CLAIMS

1.    An optical measuring device for calculating a dimensional property of an article from the shadow produced by the article passing through a light beam and comprising a gauging head (1) formed with a guideway (G) for passing an article (3) to be optically measured, opposing slits (S) in a pair of spaced guide members (M) of the guideway (G) in communication with the interior of the gauging head (1), through which light is emitted and received respectively by an optical system (4,5,6) within the gauging head (1) to establish said beam of light (P) across the guideway (G) characterised in that each guide member (M) is provided with internal ducting (D) for directing a particle-free gaseous medium through the opposing slits (S) to the guideway (G) thereby to set up a particle-free gaseous curtain across the guideway (G) and prevent contaminating matter from entering said slits (S).

2. An optical measuring device as claimed in Claim 1 wherein the gas forming said gaseous-free curtain is passed through the opposing slits (S) which are so arranged to direct said curtain transverse to the direction of travel of said article.

3.    An optical measuring device as claimed in Claim 2 wherein a pair of branched passageways (15) are provided at the base of the guideway (G) in communication with the ducting (D) in respective guide members (M) and air is fed to the branched passageways (15) through an intermediate duct (14), by means of a pump (13) which draws in ambient air through a filter (12) designed to trap particulate contaminate.

4.    An optical measuring device substantially as hereinbefore described with reference to Figures 3 and 4 of the accompanying drawings.

0094463

1-2

FIG .1.

35,040 mm

FIG .2.

SCANNING MIRROR

FIG.3.

FIG.4.

0094463